(19) Europäisches Patentamt

European Patent Office

Office européen des brevets

(11) Veröffentlichungsnummer : **0 397 769 B1**

(12) # EUROPÄISCHE PATENTSCHRIFT

(45) Veröffentlichungstag der Patentschrift :
17.06.92 Patentblatt 92/25

(21) Anmeldenummer : 89902244.6

(22) Anmeldetag : 01.02.89

(86) Internationale Anmeldenummer :
PCT/EP89/00079

(87) Internationale Veröffentlichungsnummer :
WO 89/07065 10.08.89 Gazette 89/18

(51) Int. Cl.⁵ : **B62D 9/00**

(54) **MEHRACHSLENKANLAGE.**

(30) Priorität : 04.02.88 DE 3803205

(43) Veröffentlichungstag der Anmeldung :
22.11.90 Patentblatt 90/47

(45) Bekanntmachung des Hinweises auf die
Patenterteilung :
17.06.92 Patentblatt 92/25

(84) Benannte Vertragsstaaten :
**DE FR GB IT**

(56) Entgegenhaltungen :
**EP-A- 0 079 088**
**EP-A- 0 225 773**
**DE-A- 3 507 098**
**GB-A- 2 127 362**
**Patent Abstracts of Japan, Band 11, Nr. 238,**
**M613**

(73) Patentinhaber : **ZF FRIEDRICHSHAFEN**
**Aktiengesellschaft**
**Löwentaler Strasse 100 Postfach 2520**
**W-7990 Friedrichshafen 1 (DE)**

(72) Erfinder : **ELSER, Dieter**
**Jägerstrasse 10**
**W-7087 Essingen (DE)**
Erfinder : **KOGEL, Walter**
**Am Sonnenweg 2**
**W-7083 Abtsgmünd (DE)**

(74) Vertreter : **Raue, Reimund**
**Zahnradfabrik Friedrichshafen AG Löwentaler**
**Strasse 100 Postfach 2520**
**W-7990 Friedrichshafen 1 (DE)**

**Beschreibung**

Die Erfindung betrifft eine Mehrachslenkanlage mit einem mechanisch-hydraulischen Lenkgetriebe mit einem Arbeitszylinder zur Lenkkraftverstärkung für eine Achse und einer hydrostatischen, mit einer Blockiereinrichtung versehenen Lenkung für eine zweite Achse, die über ein Lenkgestänge mit einem zweiten Arbeitszylinder betätigbar ist. Dabei weist die Blockiereinrichtung einen dem Lenkgestänge der zweiten Achse zugeordneten Zylinder auf, in dem ein mit dem Lenkgestänge verbundenes und damit verstellbares Halteglied durch ein ein- und ausrückbares Blockierventil mechanisch arretierbar ist. Dem Lenkgestänge der zweiten Achse ist eine Zentriereinrichtung mit zwei auf einem längsverschiebbaren Teil des Lenkgestänges verschiebbar angeordneten Zentrierkolben angeordnet. Das längsverschiebbare Teil besitzt einen Anschlag für jeden der beiden Zentrierkolben. Ein feststehendes Teil der Zentriereinrichtung besitzt einen zweiten, die Mittenstellung des Lenkgestänges definierenden beschlag für jeden der Zentrierkolben. Außerdem sind die Kolbenräume der beiden Zentrierkolben von einer Druckmittelquelle aus, die durch ein Schaltglied aktivierbar ist, unter Druck setzbar.

Eine derartige Lenkung ist z. B. in der DE-A-35 07 089 beschrieben. Die Hinterradlenkanordnung dieser Druckschrift enthält eine elektronische Steuereinrichtung, durch die auftretende Synchronisationsfehler beseitigt werden können. Diese elektronische Steuereinrichtung ist jedoch sehr aufwendig.

Der vorliegenden Erfindung liegt daher die Aufgabe zugrunde eine Mehrachslenkanlage der eingangs erwähnten Art zu schaffen, bei der auch im Betrieb eine Synchronisierung der gelenkten Achsen zueinander auf einfache Art ermöglicht wird.

Erfindungsgemäß wird diese Aufgabe durch die im kennzeichnenden Teil von Anspruch 1 genannten Merkmale gelöst.

Durch die erfindungsgemäße Zentriereinrichtung, insbesondere durch die Druckbeaufschlagung der Kolbenräume wird kontinuierlich während des Betriebes stets eine erneute Synchronisierung bzw. ein Synchronisierungsimpuls gegeben. Jedes Mal beim Überfahren der Geradeausstellung der einen Achse, im allgemeinen der Vorderachse, wird Druck in die beiden Kolbenräume gegeben, wodurch der entsprechend verschobene Zentrierkolben wieder an seinen äußeren Anschlag geschoben wird, wobei dieser aufgrund des inneren Anschlages gleichzeitig auch den verschiebbaren Teil des Lenkgestänges mitnimmt und exakt in die Mittenstellung bringt. Auf diese Weise können Leckagen jeder Art zu keinem hydrostatischen Versatz führen; vielmehr ist stets eine exakte Synchronisierung zwischen den gelenkten Achsen vorhanden.

Als weiterer Vorteil wird durch die erfindungsgemäße Zentriereinrichtung erreicht, daß in jeder Lage eine Rückführung der Achse in die Geradeausfahrtstellung möglich ist.

Von Vorteil ist weiterhin auch die Verbindung mit der Blokkiereinrichtung, die im allgemeinen so ausgelegt ist, daß sie im Notfall überfahren werden kann, damit es insbesondere bei Geländefahrzeugen zu keinen Brüchen in mechanischen Teilen kommen kann, und daß die Zentriereinrichtung als Gegendruck bei diesem zwangsweisen Auslenken wirkt. Auf diese Weise wird ein Puffer geschaffen. Außerdem ist damit sichergestellt, daß dann, wenn die Überlast wieder verschwunden ist, durch eine entsprechende Druckeinleitung in die Kolbenräume eine automatische Rückstellung in Geradeausfahrtstellung erfolgt.

In der EP-OS 150 520 ist bereits ein handbetätigtes Zuschaltventil mit einer Zentriereinrichtung dargestellt, wobei die Zentrierung über eine Feder vorgenommen wird. Nachteilig ist dabei jedoch, daß damit nur eine bestimmte Federkennung zur Verfügung steht und daß stets ein Gegendruck vorhanden ist. Außerdem ist die charakteristik der Einrichtung beschränkt.

Eine vorteilhafte Weiterbildung der Erfindung besteht darin, daß als Druckmittelquelle ein Druckspeicher vorgesehen ist.

Auf diese Weise ist stets der für die Zentrierung und Rückstellung erforderliche Druck vorhanden. Dies bedeutet, daß auch bei einem Ausfall der hydraulischen Lenkanlage über den Speicherdruck eine Rückstellung und Zentrierung erfolgen kann. Aus Sicherheitsgründen kann dabei die Anlage so geschaltet sein, daß z.B. bei einem Druckabfall und bei einem Erreichen eines bestimmten Mindestdruckes in dem Druckspeicher eine Rückstellung der Achse in eine Geradeausstellung erfolgt.

Grundsätzlich ist selbstverständlich als Druckmittelquelle auch eine Pumpe möglich.

Von Vorteil ist es, wenn die beiden Kolbenräume in ausgelenkter Lenkstellung an einen Zusatzspeicher angeschlossen sind.

Der Druck in dem Druckspeicher wird dabei relativ niedrig gewählt werden. Mit dem Zusatzspeicher soll lediglich eine geringe Vorspannung dahingehend erreicht werden, daß der verschobene Zentrierkolben aufgrund des Vorspanndruckes in dem Kolbenraum stets am inneren Anschlag des verschieblichen Teiles anliegt. Auf diese Weise sind keine langen Wege erforderlich, wenn über die Druckmittelquelle ein entsprechend hoher Druck zur Rückstellung des Lenkgestänges in die Neutralstellung eingebracht wird.

Eine weitere sehr vorteilhafte Ausgestaltung der Erfindung besteht darin, daß in einer Druckentlastungsleitung der Zentriereinrichtung eine Drossel eingesetzt ist.

Durch die Drossel wird in den beiden Kolbenräumen praktisch ein Staudruck erzeugt. Dieser Staudruck führt zu einer gedämpften Rückstellung. Im ausgelenkten Zustand, kann der Druck aus dem Kolbenraum, der verkleinert wird, nur gedrosselt entweichen.

In einfacher Weise ist das längs verschiebliche Teil als Kolbenstange ausgebildet, die auf einem Bereich die beiden Zentrierkolben und auf einem anderen Bereich das Halteglied trägt.

Eine einfache und sehr kompakte Ausgestaltung der Erfindung ergibt sich, wenn das auf der Kolbenstange angeordnete Halteglied den inneren Anschlag bildet. Auf diese Weise wird eine deutlich kürzere Baulänge erreicht, denn das Halteglied bildet den Anschlag zwischen den beiden Zentrierkolben. Dabei ist lediglich dafür zu sorgen, daß eine Druckentlastungsleitung vorgesehen ist, die bei einer hydraulischen Einrichtung zum Tank führt.

Eine einfache Möglichkeit hierfür besteht darin, daß die Druckentlastungsleitung durch das Blockierteil führt.

Wenn das Blockierteil dabei der Blockierkolben ist, der hydraulisch betätigt ist, kann dabei in dem Kolben eine Drossel eingebaut sein, wodurch sich bei einer Rückstellung des Lenkgestänges ein Staudruck unter dem Blockierkolben bildet. Auf diese Weise ist automatisch sichergestellt, daß der Blockierkolben nicht in seine Blockierstellung geschoben wird bevor der verschiebbare Teil des Lenkgestänges in die Mittenstellung zurückgekehrt ist.

In einer erfindungsgemäßen Ausgestaltung ist dabei vorgesehen, daß das Blockierteil mit einem Blockierkolben versehen ist, der durch eine Federeinrichtung in eine Blockierstellung vorgespannt ist, wobei zur Entblockierung der Kolbenraum des Blockierkolbens über einen Anschluß mit Druckmittel versorgbar ist.

Diese Ausgestaltung stellt eine Umkehrung der für die Blockierung vorgesehenen Mittel im Vergleich zu der Anlage nach der DE-OS 36 15 740 dar.

Da jedoch durch den bei dieser Ausgestaltung vorhandenen Druck, dieser auch der Blockiereinrichtung zur Verfügung steht, ist diese Form der Entblockierung sowohl einfacher als auch sicherer.

Als eine Federeinrichtung können mehrere übereinander angeordnete Blattfedern vorgesehen sein.

Eine weitere sehr vorteilhafte und nicht naheliegende Weiterbildung der Erfindung besteht darin, daß das Zylindergehäuse für die Blockiereinrichtung und die Zentriereinrichtung derart erweitert ist, daß die Kolbenstange mit einem darauf angeordneten Kolben und einem eigenen Kolbenraum als Arbeitszylinder für die zweite Achse ausgebildet ist.

Wenn der Druck in dem Arbeitskolben für den Arbeitszylinder höher gewählt wird als der Druck für die Zentriereinrichtung, kann der Arbeitszylinder normalerweise zum Auslenken verwendet werden. Bei einer Störung von außen ist es jedoch notwendig, daß die Hinterachse in Geradeausstellung zentriert wird. Fällt somit der Druck in dem Arbeitszylinder entsprechend ab, wird durch den Druckspeicher für die Zentriereinrichtung eine Lenkungsrückstellung mit gleichzeitiger Blockierung und Zentrierung erreicht.

Grundsätzlich ist diese Notfunktion auch bei einer Lösung möglich, wobei der Arbeitszylinder üblicherweise als separates Teil vorgesehen ist, aber in diesem Falle muß die gesamte Kraft für die Rückstellung über die Zentriereinrichtung und über das gesamte Lenkgestänge auf diesen Arbeitszylinder übertragen werden, weshalb hierfür eine entsprechende Dimensionierung der dabei zusammenwirkenden Teile notwendig ist.

Der Bereich in welchem die Zentrierung erfolgt, d.h. der Bereich, in welchem die Zentrierkolbenräume mit Druck beaufschlagt werden, kann in Abhängigkeit des Lenkwinkels der Vorderachse gewählt werden. So kann man hierfür z.B. einen Lenkwinkel von 5 Grad oder größer in beiden Richtungen vorsehen, wodurch ein verbessertes Geradeausfahrtverhalten erreicht wird.

Nachfolgend sind Ausführungsbeispiele der Erfindung anhand der Zeichnung prinzipmäßig beschrieben. Es zeigt:

Figur 1: einen Längsschnitt durch eine Blockier-/ Zentriereinheit in Geradeausfahrtstellung;

Figur 2: einen Längsschnitt durch das Ausführungsbeispiel nach der Figur 1 im ausgelenkten Zustand;

Figur 3: einen Längsschnitt durch eine Blockier-Zentrier- und Arbeitszylindereinheit;

Figur 4: ein hydraulisches Schaltbild für die erfindungsgemäße Mehrachslenkanlage nach den Figuren 1 und 2;

Figur 5: ein hydraulisches Schaltbild für die erfindungsgemäße Mehrachslenkanlage nach dem Ausführungsbeispiel der Figur 3 mit integriertem Arbeitszylinder.

Die erfindungsgemäße Blockier-/Zentriereinheit weist ein gemeinsames Zylindergehäuse 1 mit einer Blockiereinheit 2 und einer Zentriereinheit 3 auf.

In dem Zylindergehäuse 1 ist eine Kolbenstange 4 als längsverschiebliches Teil eines Lenkgestänges mit einem Verbindungsteil 5 zum Anschluß an die übrigen Lenkgestängeteile bekannter Bauart. In gleicher Weise besitzt das Zylindergehäuse 1 auf der gegenüberliegenden Seite ein Verbindungsteil 6. An dem von dem Verbindungsteil 5 abgewandten Ende ist ein Halteglied 7 mit einer Profilierung am Umfang befestigt. In die Profilierung des Haltegliedes 7 greift ein Blockierkolben 8 mit seinem vorderen Ende in Blockierstellung ein. Der Blockierkolben 8 ist in einem Aufsatz 9 des Zylindergehäuses 1 gelagert und geführt. Zwischen dem eigentlichen Kolbenteil 10 und einem Bund 11 auf der Vorderseite des Aufsatzes 9 befindet sich ein Kolbenraum 12 mit einem Druckanschluß 13. Hinter dem Kolbenteil 10 befindet sich ein Druckausgleichsraum 14, der über einen Anschluß 15 mit einem Tank T verbunden ist. Eine Feder 16 sorgt für eine Vorspannung des Blockierkolbens 8 in Blockierstellung.

Der nähere Aufbau und die Wirkungsweise der Blockiereinheit 2 ist im übrigen auch in der DE-OS 36 15 740 näher beschrieben. Die Zentriereinheit 3 weist zwei Zentrierkolbenräume 17 und 18 und zwei Zentrierkolben 19 und 20 auf. Die Zentrierkolben 19 und 20 sind verschieblich auf der Kolbenstange 4 angeordnet. Beide Zentrierkolbenräume 17 und 18 besitzen Druckanschlüsse 21 und 22. Zwischen den beiden Zentrierkolben 19 und 20 bildet ein Bund 23 mit einem größeren Durchmesser wie die Kolbenstange im übrigen Bereich einen Anschlag für die beiden Zentrierkolben 19 und 20.

In der gleichen Ebene ist in ein Zylindergehäuse ein Anschlag angeordnet, der durch zwei ringförmige Stege 24 und 25 gebildet wird, die nach innen ragen. Zwischen den beiden ringförmigen Stegen 24 und 25 befindet sich ein Auslaß 26, der mit dem Tank T verbunden ist.

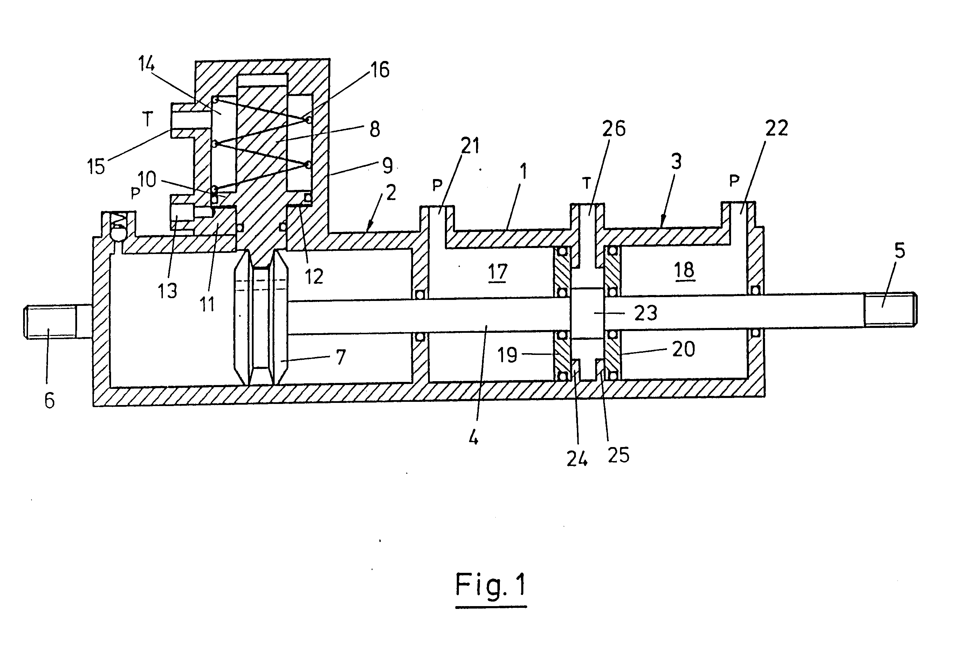

Wie aus der Figur 1 ersichtlich ist, liegen in Zentrierstellung, d.h. in einer Geradeausfahrtstellung die beiden Zentrierkolben 19 und 20 mit ihren aneinander zugekehrten Seiten sowohl an dem Bund 23 als auch an den ringförmigen Stegen 24 und 25 an.

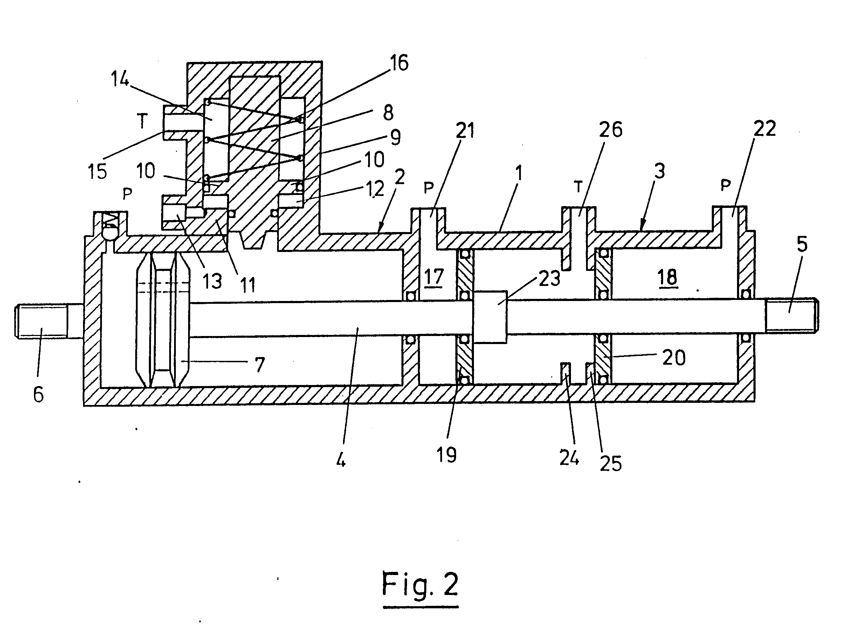

In der Figur 2 ist eine Position des Ausführungsbeispiels nach der Figur 1 im ausgelenkten Zustand dargestellt. Wird der Arbeitszylinder für die Betätigung des Lenkgestänges mit Druckmittel versorgt und gleichzeitig auch über den Druckanschluß 13 Druck in den Kolbenraum 12 gegeben, so wird der Blockierkolben 8 entgegen der Vorspannung durch die Feder 16 aus der Verbindung mit dem Halteglied 7 gelöst, d.h. eingefahren. Auf diese Weise kann die Kolbenstange 4, die mit dem Lenkgestänge verbunden ist bzw. ein Teil davon darstellt, entsprechend verschoben werden (in der Figur 2 nach links). Durch den Bund 23 wird der Zentrierkolben 19 damit ebenfalls nach links verschoben, während der Zentrierkolben 20 aufgrund seiner Verschiebbarkeit auf der Kolbentange 4 in seiner Position an dem ringförmigen Steg 25 weiter anliegt. Auf diese Weise kann in herkömmlicher Weise gelenkt werden. Erfolgt nun jedoch eine Rückstellbewegung an dem Lenkgestänge, so kann sich die Kolbenstange 4 frei wieder nach rechts bewegen. Wird dabei die Geradeausfahrtstellung überschritten oder gelangt man in einen Bereich einer ungefähren Geradeausfahrt, der z.B. 5 Grad in beide Richtungen betragen kann, so wird über ein nachfolgend noch näher besprochenes Schaltglied über den Druckanschluß 21 Druck in die Kolbenräume 17 und 18 gegeben. Dadurch wird der Zentrierkolben 19 nach rechts verschoben und zwar solange bis er an dem Bund 23 wieder zur Anlage kommt. Aufgrund des Druckes in dem Zentrierkolbenraum 17 und des ringförmigen Steges 24 wird dabei beim Nulldurchgang der Vorderachse, d.h. exakt in Geradeausstellung eine Zentrierung durchgeführt, sofern aufgrund von Lekagen die Kolbenstange 4 nicht selbst exakt wieder in diese Position zurückkehren würde. Bei einer weiteren Bewegung nach rechts verbleibt der Zentrierkolben 19 auf Anlage an dem ringförmigen Steg, während in diesem Falle der Zentrierkolben 20 von dem Bund 23 nach rechts mitgenommen wird. Bei einer erneuten Bewegungsrichtungsumkehr treten sinngemäß die gleichen Vorgänge auf. Dies bedeutet, bei jedem Nulldurchgang der Vorderachse findet eine Zentrierung statt. Gleiches gilt für eine Beendigung der Lenkbewegung bzw. ein Abschalten der Achse, wobei in diesem Falle bei einem Druckauslaß aus dem Kolbenraum 12 der Blockierkolben 8 für eine mechanische Blockierung sorgt.

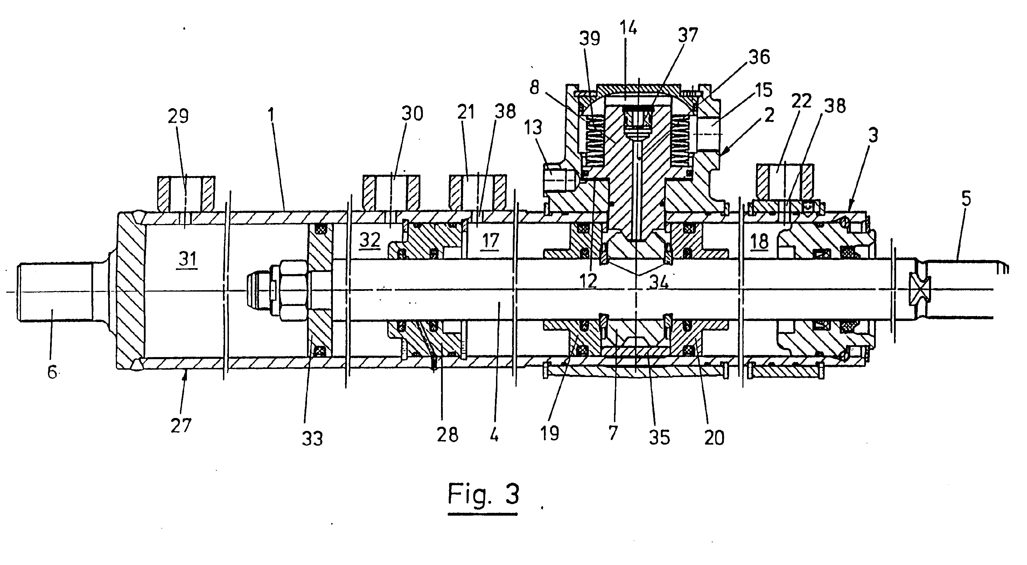

In der Figur 3 ist eine Ausgestaltung dargestellt, wobei die Blockiereinheit 2 in die Zentriereinheit 3 integriert ist. Zusätzlich ist das Zylindergehäuse 1 soweit verlängert, daß ein Arbeitszylinder 27, der die hydraulische Betätigung des Lenkgestänges vornimmt, in die Gesamteinheit integriert. Ein Dichtblock 28 sorgt für eine entsprechende Abdichtung und Lagerung der Kolbenstange 4 und zwei Druckmittelanschlüsse 29, 30 sind in üblicher Weise mit einer Druckmittelquelle verbunden, um entweder den Arbeitszylinderraum 31 oder 32 mit Druckmittel zur entsprechenden Verstellung der Kolbenstange 4 zu versorgen. In dem Ausführungsbeispiel nach der Figur 3 sind gleiche Teile mit den gleichen Bezugszeichen wie in den Figuren 1 und 2 versehen.

Ein Arbeitskolben 33 trennt in üblicher Weise die beiden Kolbenräume 31 und 32 voneinander. Wie ersichtlich, bildet in diesem Falle das Halteglied 7 gleichzeitig auch den inneren Anschlag für die beiden Zentrierkolben 19 und 20. Dies bedeutet, der Bund 23 entfällt in diesem Falle. Das Halteglied 7 kann dabei fest auf der Kolbenstange 4 angeordnet sein oder es liegt zwischen auf beiden Seiten in Nuten angeordneten Sicherungsringen 34, die damit die eigentlichen Anschläge für die Zentrierkolben 19 und 20 bilden.

Statt zwei ringförmigen Stegen 24 und 25 bildet den äußeren Anschlag, welcher gleichzeitig auch die Mittenstellung definiert, eine Buchse 35 mit einer Länge, die dem Abstand der beiden Sicherungsringe 34 außenseitig entspricht.

Für eine Druckableitung sorgt eine Entlüftungsbohrung in dem Blockierkolben 8. In der Entlüftungsbohrung 36 ist eine Drossel 37 angeordnet. Die Entlüftungsbohrung 36 ist über den Druckausgleichsraum 14 und den

EP 0 397 769 B1

Anschluß 15 wiederum mit dem Tank T verbunden.

In den beiden Druckanschlüssen 21 und 22 ist ebenfalls jeweils eine Drossel 38 angeordnet, die durch eine entsprechende Querschnittveränderung des Auslasses gebildet wird.

Grundsätzlich funktioniert das Ausführungsbeispiel nach der Figur 3 in gleicher Weise wie das in den Figuren 1 und 2 beschriebene. Statt einer Spiralfeder 16 sind jedoch mehrere. übereinander angeordnete Blattfedern 39 für eine Vorspannung der Blockiereinrichtung vorhanden. Zum Lösen der Blockierung wirft wiederum über den Druckanschluß 13 Druck in den Kolbenraum 12 gegeben, womit der Blockierkolben 8 abhebt und die Kolbenstange 4 entsprechend je nach Druckeinleitung in den Kolbenraum 31 oder 32 verschoben wird. In diesem Falle wird - wie vorstehend beschrieben - einer der beiden Zentrierkolben 19 bzw. 20 durch einen der beiden Sicherungsringe 34 bei der Verschiebung der Kolbenstange 4 mitgenommen, während der andere in seiner Position verbleibt. Bei einer Druckeinleitung in die Zentrierkolbenräume 17 und 18 wird der verschobene Zentrierkolben 19 wieder in seine Grundstellung zurückgeschoben und nimmt dabei auch die Kolbenstange 4 mit, wobei diese beim Durchgang durch die Mittenstellung durch die Buchse 35 zentriert wird.

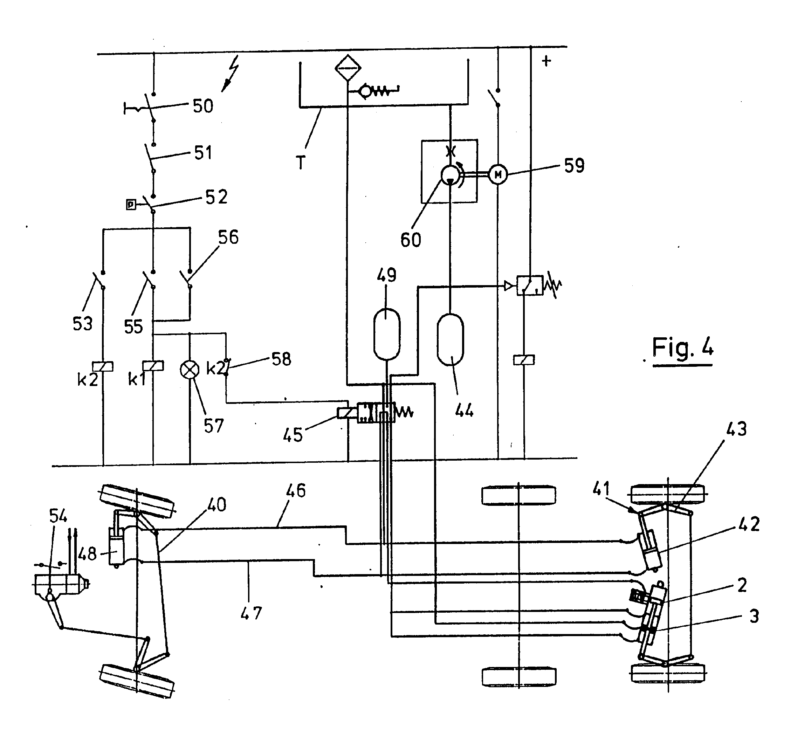

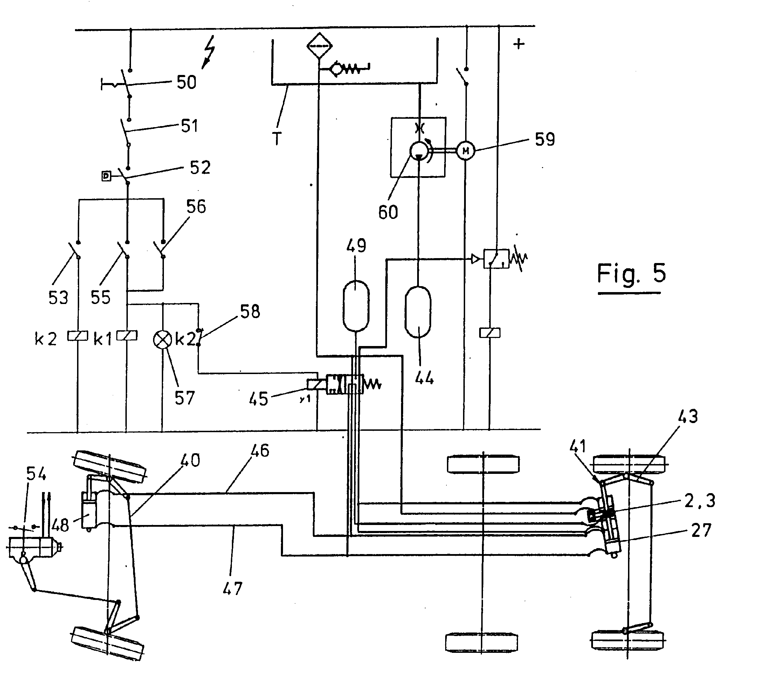

In den Figuren 4 und 5 sind zwei hydraulische Schaltbilder für die gesamte Mehrachslenkanlage mit hydrostatischer Betätigungseinrichtung für Fahrzeuge mit einer zusätzlich gelenkter Hinterachse dargestellt, wobei sich die Figur 4 auf das Ausführungsbeispiel nach den Figuren 1 und 2 und die Figur 5 auf das Ausführungsbeispiel nach der Figur 3 bezieht.

Da die Mehrachslenkanlage grundsätzlich von bekannter Bauart ist, werden nachfolgend nur die für die Erfindung wesentlichen Teile näher beschrieben.

Eine Vorderachse 40 wird in üblicher Weise mechanisch-hydraulisch gelenkt, während eine Hinterachse 41 rein hydrostatisch über einen Arbeitszylinder 42, der mit einem Lenkgestänge 43 verbunden ist, gelenkt wird. In dem Schaltschema ist das Zylindergehäuse 1 mit der Blockiereinheit 2 und der Zentriereinheit 3 ebenfalls schematisch dargestellt. Die Druckversorgung der Blockiereinheit 2 und der Zentriereinheit 3 erfolgt über einen Druckspeicher 44 und ein dazwischengeschaltetes Hydraulikventil 45. Der Arbeitszylinder 42 ist über Druckleitungen 46 und 47 mit dem Arbeitszylinder 48 der Vorderachslenkung verbunden. Der Zusatzspeicher 49, der einen wesentlich geringeren Druck liefert wie der Druckspeicher 44, z.B. nur ca. 5-10 Bar, sorgt auch im ausgelenkten Zustand, d.h. bei einer verschobenen Kolbenstange 4 für einen geringen Druck in den beiden Zentrierkolbenräumen 17 und 18, wodurch auch bei einer Verschiebung einer der beiden Zentrierkolben 19 bzw. 20 dieser stets an dem Bund 23 bzw. einem der beiden Sicherungsringe 34 anliegt, wodurch längere Wege und damit längere Zeiten bei der Rückstellung vermieden werden.

Zur Zuschaltung der Lenkung der Hinterachse 41 müssen in bekannter Weise verschiedene Bedingungen erfüllt sein, wie z.B. eine Geschwindigkeit von unter 50 km/h, Geradeausfahrtstellung der Vorderachse 40 und dgl. Grundsätzlich erfolgt die Zuschaltung über einen Wahlkontaktschalter 50 wobei 51 den Schaltkontakt für die Geschwindigkeit darstellt. 52 stellt den Speicherdruckkontaktschalter für einen ausreichenden Druck dar. 53 stellt den Schalter für eine Geradeausfahrtstellung dar, wobei die Position von der Vorderachslenkung mit dem Kontakt 54 abgegriffen wird. Der Kontakt 54 spricht innerhalb einem Auslenkwinkel von z.B. 5 Grad an. Der Schalter 55 ist dem Schaltkontakt 53 für die Vorderachsposition zugeordnet, während der Schalter 56 dem Relais K1 zugeordnet ist. Eine Kontrolleuchte 57 zeigt an, wenn die Hinterachslenkung zugeschaltet ist. Eine elektrische Betätigung des hydraulischen Ventiles 45 erfolgt über den Schalter 58. Der Hauptspeicher 44 wird in üblicher Weise durch eine von einem Elektromotor 59 angetriebene Pumpe 60 geladen.

Die Zu/Abschaltung der Hinterachse 41 zur Lenkung wird durch folgende Faktoren beeinflußt:

Wenn ein Lenkwinkel von z.B. 5 Grad in eine der beiden Richtungen unterschritten ist, wird der Kontakt 54, somit Schalter 53 und über Relais K2 der Schalter 55 und 58 betätigt. Liegt die Geschwindgkeit unter z.B. 50 km/h wird der Schalter 51 geschlossen. Bei ausreichendem Druck im Speicher 44 ist der Schalter 52 ebenfalls geschlossen. Das Relais K1 zieht an und schließt Kontakt 56. Die Kontrolleuchte 57 leuchtet, was bedeutet, daß die Hinterachslenkung betätigt ist. Bei Überschreiten von mehr als z.B. 5 Grad Lenkwinkel wird der Kontakt 54 unterbrochen. Über Schalter 53 fällt das Relais K2 ab, Schalter 58 wird geschlossen und Ventil 45 betätigt. Gleichzeitig ist dies die Arbeitsstellung der hydraulischen Verbindung zwischen dem Geberzylinder 48 der Vorderachse und dem hydraulischen Nehmerzylinder der Hinterachse 41, wobei der Nehmerzylinder der Arbeitszylinder 42 ist.

Bei mehreren gelenkten Hinterachsen kann der Geberzylinder, d.h. der Arbeitszylinder 48 der Vorderachse auch statt direkt zur Betätigung des Nehmerzylinders der Hinterachse 41 auch nur zur Ansteuerung eines Ventiles verwendet werden, wobei in diesem Falle für die Hinterachslenkung eine gesonderte Hydraulikeinheit, z.B. eine eigene Pumpe, vorgesehen ist.

In der Arbeitsstellung, d.h. in der ausgelenkten Stellung der Hinterachse 41 werden die Druckanschlüsse 21 und 22 der Zentrierkolbenräume 17 und 18 auf den Speicher 49 geschaltet. Gleichzeitig wird über den Druckanschluß 13 Druck in den Kolbenraum 12 gegeben, womit der Blockierkolben 8 angehoben wird und damit das Halteglied 7 freigibt. Anschließend kann die Kolbenstange 4 verstellt werden. Der Arbeitszylinder 42 bzw. bei

5

dem Ausführungsbeispiel nach der Figur 3 der in die Einheit integrierte Arbeitszylinder 27 funktionieren in üblicher Weise und stellen die hydraulische Verstärkung der Lenkung dar.

Wenn der Vorderachs-Einschlagwinkel unterhalb 5 Grad liegt, öffnet der Schalter 58 und das Ventil 45 fällt ab. Damit erhalten die Zentrierkolbenräume 17 und 18 wieder Druck und zwar auf beiden Seiten jeweils den gleichen Druck. Auf diese Weise erfolgt eine hydraulische Zentrierung der Hinterachse 41, wobei diese Zentrierung bei jedem Durchgang durch die Nullstellung erfolgt.

Das hydraulische Schaltschema nach der Figur 5 ist grundsätzlich von gleichem Aufbau, wie das nach der Figur 4. Der einzige Unterschied liegt lediglich darin, daß in diesem Falle kein gesonderter Arbeitszylinder 48 vorhanden ist, sondern dieser in die Blockier-/Zentriereinheit integriert ist und zwar entsprechend dem Ausführungsbeispiel nach der Figur 3. Aus diesem Grunde sind auch die entsprechenden Bezugszeichen aus der Figur 4 in die Figur 5 übernommen worden.

| 1 | Zylindergehäuse | 31 | Kolbenraum |
|---|---|---|---|
| 2 | Blockiereinheit | 32 | " |
| 3 | Zentriereinheit | 33 | Arbeitskolben |
| 4 | Kolbenstange | 34 | Sicherungsring |
| 5 | Verbindungsteil | 35 | Buchse |
| 6 | " " | 36 | Entlüftungsbohrung |
| 7 | Halteglied | 37 | Drossel |
| 8 | Blockierkolben | 38 | " |
| 9 | Aufsatz | 39 | Blattfedern |
| 10 | Kolbenteil | 40 | Vorderachse |
| 11 | Bund | 41 | Hinterachse |
| 12 | Kolbenraum | 42 | Arbeitszylinder |
| 13 | Druckanschluß | 43 | Lenkgestänge |
| 14 | Druckausgleichsraum | 44 | Druckspeicher |
| 15 | Anschluß | 45 | Hydraulikventil |
| 16 | Feder | 46 | Druckleitungen |
| 17 | Zentrierkolbenräume | 47 | " " |
| 18 | " " " | 48 | Arbeitszylinder |
| 19 | Zentrierkolben | 49 | Zusatzspeicher |
| 20 | " " | 50 | Wahlkontaktschalter |
| 21 | Druckanschluß | 51 | Schaltkontakt |
| 22 | " " | 52 | Speicherdruckkontaktschalter |
| 23 | Bund | 53 | Schalter |
| 24 | ringförmige Stege | 54 | Kontakt |
| 25 | " " | 55 | Schalter |
| 26 | Auslaß | 56 | " |
| 27 | Arbeitszylinder | 57 | Kontrolleuchte |
| 28 | Dichtblock | 58 | Schalter |
| 29 | Druckmittelanschluß | 59 | Elektromotor |
| 30 | " " | 60 | Pumpe |

EP 0 397 769 B1

**Patentansprüche**

1. Mehrachslenkanlage für Fahrzeuge mit einem mechanisch - hydraulischen Lenkgetriebe mit einem Arbeitszylinder (48) zur Lenkkraftverstärkung für eine Achse (40) und einer hydrostatischen, mit einer Blockiereinrichtung versehenen Lenkung für eine zweite Achse (41), die über ein Lenkgestänge (43) mit einem zweiten Arbeitszylinder (42) betätigbar ist, wobei die Blockiereinrichtung einen dem Lenkgestänge (43) der zweiten Achse (41) zugeordneten zylinder aufweist, in dem ein mit dem Lenkgestänge (43) verbundenes und damit verstellbares Halteglied (7) durch ein ein- und ausrückbares Blockierteil mechanisch arretierbar ist, wobei in dem Lenkgestänge (43) der zweiten Achse (41) eine Zentriereinrichtung (3) mit zwei auf einem längsverschiebbaren Teil (4) des Lenkgestänges (43) verschiebbar angeordneten Zentrierkolben (19, 20) angeordnet ist, wobei das längsverschiebbare Teil (4) einen Anschlag (23, 34) für jeden der beiden Zentrierkolben (19, 20) besitzt und wobei ein feststehendes Teil (24, 25, 35) der Zentriereinrichtung einen zweiten, die Mittenstellung des Lenkgestänges (43) definierenden Anschlag für jeden der Zentrierkolben (19,20) besitzt und wobei die Kolbenräume (17, 18) der beiden Zentrierkolben (19, 20) von einer Druckmittelquelle (44) aus, die durch ein Schaltglied (43) aktivierbar ist, unter Druck setzbar sind, dadurch **gekennzeichnet**, daß die Kolbenräume (17, 18) der beiden Zentrierkolben (19, 20) bei jedem Überfahren der Geradeausstellung der einen Achse (40) mit Druck beaufschlagt werden.

2. Mehrachslenkanlage nach Anspruch 1, dadurch **gekennzeichnet**, daß die beiden Kolbenräume (17, 18) in ausgelenkter Lenkstellung an einen Zusatzspeicher (49) mit einem niedrigen Vorspanndruck angeschlossen sind.

3. Mehrachslenkanlage nach einem der Ansprüche 1 oder 2, dadurch **gekennzeichnet**, daß in einer Druckentlastungsleitung (36) der Zentriereinrichtung (3) eine Drossel (37) eingesetzt ist.

4. Mehrachslenkanlage nach einem der Ansprüche 1 - 3, dadurch **gekennzeichnet**, daß das längsverschiebbare Teil als Kolbenstange (4) ausgebildet ist, die auf einem Bereich die beiden Zentrierkolben (19, 20) und auf einem anderen Bereich das Halteglied (7) trägt.

5. Mehrachslenkanlage nach den Ansprüchen 3 und 4, dadurch **gekennzeichnet**, daß die Druckentlastungsleitung (36) durch das Blockierteil (8) führt.

6. Mehrachslenkänlage nach Anspruch 4 oder 5, dadurch **gekennzeichnet**, daß das Blockierteil mit einem Blockierkolben (8) versehen ist, der durch eine Federeinrichtung (16, 39) in eine Blockierstellung vorgespannt ist, wobei zur Entblockierung der Kolbenraum (12) des Blockierkolbens (8) über einen Anschluß (13) mit Druckmittel beaufschlagbar ist.

7. Mehrachslenkanlage nach Anspruch 6, dadurch **gekennzeichnet**, daß die Federeinrichtung aus einem Paket von hintereinander angeordneten Blattfedern (39) besteht.

8. Mehrachslenkanlage nach einem der Ansprüche 1 - 7, dadurch **gekennzeichnet**, daß das zylindergehäuse (1) für die Blockiereinrichtung (2) und die zentriereinrichtung (3) derart erweitert ist, daß die Kolbenstange (4) mit einem darauf angeordneten Kolben (33) und eigenen Kolbenräumen (31, 32) als Arbeitszylinder (27) für die zweite Achse (41) ausgebildet ist.

**Claims**

1. Multi-axle steering system for motor vehicles having a hydro-mechanical steering gear with a working cylinder (48) for boosting the steering power for one axle (40) and a hydrostatic power steering gear, provided with a blocking device, for a second axle (41) which is operable via a steering linkage (43) by a second working cylinder (42), wherein the blocking device has a cylinder which is associated with the steering linkage (43) of the second axle (41) and in which a holding member (7) connected to the steering linkage (43), and hence adjustable, is mechanically arrestable by means of an engageable and disengageable blocking part, wherein a centering device (3), which has two centering pistons (19, 20) displaceably disposed on a longitudinally displaceable part (4) of the steering linkage (43), is disposed in the steering linkage (43) of the second axle (41), wherein the longitudinally part (4) has a stop (23, 34) for each of the two centering pistons (19, 20) and wherein a stationary part (24, 25, 35) of the centering device has a second stop for each of the centering pistons (19, 20), said stop defining the central position of the steering linkage (43), and wherein the piston chamber (17, 18) of the two centering pistons (19, 20) may be placed under pressure from a pressure medium source (44) which may be activated by a switching member (43), **characterized** in that the pressure is admitted to the piston chambers (17, 18) of the two centering pistons (19, 20) upon each overtravel of the straight forward position of the one axle (40).

2. Multi-axle steering system according to claim 1, **characterized** in that the two piston chambers (17, 18) in the deflected steering position are connected to an auxiliary accumulator (49) with a low preloading pressure.

8

3. Multi-axle steering system according to one of claims 1 or 2, **characterized** in that a throttle (37) is installed in a pressure relief line (36) of the centering device (3).

4. Multi-axle steering system according to one of claims 1 to 3, **characterized** in that the longitudinally displaceable part takes the form of a piston rod (4) which carries the two centering pistons (19, 20) on one portion and the holding member (7) on another portion.

5. Multi-axle steering system according to claims 3 and 4, **characterized** in that the pressure relief line (36) runs through the blocking part (8).

6. Multi-axle steering system according to claim 4 or 5, **characterized** in that the blocking part is provided with a blocking piston (8) which is preloaded by a spring device (16, 39) into a blocking position, with pressure medium being admissible via a connection (13) to the piston chamber (12) of the blocking piston (8) for the purpose of unblocking.

7. Multi-axle steering system according to claim 6, **characterized** in that the spring device comprises an assembly of leaf springs (39) disposed one behind the other.

8. Multi-axle steering system according to one of claims 1 to 7, **characterized** in that the cylinder housing (1) for the blocking device (2) and the centering device (3) is enlarged in such a way that the piston rod (4), having a piston (33) disposed thereon and special piston chambers (31, 32), takes the form of a working cylinder (27) for the second axle (41).

**Revendications**

1. Direction à essieux multiples pour véhicules, comportant un mécanisme de direction mécanique-hydraulique comprenant un vérin (48) pour renforcer l'effort de braquage sur un essieu (40) et une direction hydrostatique pourvue d'un organe de blocage pour un second essieu (41) et susceptible d'être actionnée par un second vérin (42) au moyen d'une tringlerie (43), le dispositif de blocage comportant un cylindre associé à la tringlerie (43) du second essieu (41) et dans lequel un élément de retenue (7), lié à la tringlerie (43) et déplaçable avec elle, peut être bloqué mécaniquement par engagement ou dégagement d'un organe de blocage, la tringlerie de direction (43) du second essieu (41) comportant un dispositif de centrage (3) pourvu de deux pistons de centrage (19, 20) montés de manière coulissante sur une partie coulissant longitudinalement (4) de la tringlerie (43), ladite partie coulissante (4) possédant un arrêt (23, 34) pour chacun des deux pistons de centrage (19, 20), une partie fixe (24, 25, 35) du dispositif de centrage comportant, pour chacun des pistons de centrage (19, 20) un second arrêt définissant la position médiane de la tringlerie (43), les chambres de pression (17, 18) associées aux deux pistons de centrage (19, 20) pouvant être mises sous pression à partir d'une source de pression (44) commandée par un élément de commutation (43), **caractérisée** en ce que les chambres de pression (17, 18) associées aux deux pistons de centrage (19, 20) sont mises sous pression à chaque passage à la position de marche en ligne droite du premier essieu (40).

2. Direction selon la revendication 1, **caractérisée** en ce que les deux chambres de pression (17, 18) sont raccordées, en position de braquage, à un accumulateur auxiliaire (49) à basse pression.

3. Direction selon l'une des revendications 1 ou 2, **caractérisée** en ce qu'un étranglement (37) est interposé dans un conduit de décharge (36) du dispositif de centrage (3).

4. Direction selon l'une des revendications 1 à 3, **caractérisée** en ce que ladite partie coulissant longitudinalement est formée par une tige de piston (4) dont une zone porte les deux pistons de centrage (19, 20) et une autre zone porte l'élément de retenue (7).

5. Direction selon les revendications 3 et 4, **caractérisée** en ce que le conduit de décharge (36) passe à travers l'organe de blocage (8).

6. Direction selon la revendication 4 ou 5, **caractérisée** en ce que l'organe de blocage est pourvu d'un piston de blocage (8) qui est préchargé par un dispositif à ressort (16, 39) en direction d'une position de blocage, le déblocage s'effectuant par introduction d'un fluide de pression à travers un raccord (13) dans la chambre de pression (12) du piston de blocage (8).

7. Direction selon la revendication 6, **caractérisée** en ce que le dispositif à ressort est constitué d'un paquet de lames-ressorts (39) disposées les unes derrière les autres.

8. Direction selon l'une des revendications 1 à 7, **caractérisée** en ce que le corps de cylindre (1) prévu pour le dispositif de blocage (2) et le dispositif de centrage (3) est agrandi de telle façon que la tige de piston (4), un piston (33) monté sur celle-ci et des chambres de- pression particulières (31, 32) forment un vérin de commande (27) pour le second essieu (41).

Fig.1

Fig. 2

Fig. 3

EP 0 397 769 B1

Fig. 4

Fig. 5